Europäisches Patentamt

European Patent Office

Office européen des brevets

(11) Veröffentlichungsnummer: **0 092 713**
A1

(12) # EUROPÄISCHE PATENTANMELDUNG

(21) Anmeldenummer: 83103399.8

(22) Anmeldetag: 07.04.83

(51) Int. Cl.³: **H 01 M 10/40**
H 01 G 9/00

(30) Priorität: 23.04.82 DE 3215126

(43) Veröffentlichungstag der Anmeldung:
02.11.83 Patentblatt 83/44

(84) Benannte Vertragsstaaten:
CH DE FR GB IT LI SE

(71) Anmelder: ROBERT BOSCH GMBH
Postfach 50
D-7000 Stuttgart 1(DE)

(72) Erfinder: Holl, Walter, Dr.
Hettichstrasse 8
D-7000 Stuttgart 60(DE)

(72) Erfinder: Mandel, Adolf
Wiesentalstrasse 63
D-7056 Weinstadt 4(DE)

(54) Speicherelement für elektrische Energie.

(57) Es wird ein Speicherelement für elektrische Energie
vorgeschlagen, das mindestens zwei Elektroden sowie einen
Elektrolyten aufweist, der einen ionisierbaren Stoff enthält.
Bei dem Speicherelement bestehen die Elektroden aus
Graphit und der ionisierbare Stoff bildet solche Ionen, die
zwischen den Schichten des Graphitgitters einbaubar sind.
Das Speicherelement kann sowohl als Sekundärbatterie als
auch als Kondensator für Gleichspannung Verwendung
finden.

FIG. 1

EP 0 092 713 A1

R.  17779
14.4.1982 Pf/Jä

Robert Bosch GmbH, 7000 Stuttgart 1

## Speicherelement für elektrische Energie

Stand der Technik

Die Erfindung geht aus von einem Speicherelement nach der
Gattung des Hauptanspruchs. Aus der EP-A-00 36 118 ist
eine Sekundärbatterie bekannt, deren Elektroden aus reversibel elektrochemisch dotierten konjugierten Polymeren,
insbesondere aus einem dotierten Polyacetylen bestehen und
deren Elektrolyt eine ionisierbare Verbindung enthält, von
der jede der beiden Ionenarten als Dotiermittel für die
Elektroden dienen kann. Die Verwendung von Polyacetylen als
Elektrodenmaterial hat den Nachteil, daß es verhältnismäßig teuer in der Herstellung ist und daß es im undotierten
Zustand nur eine geringe elektrische Leitfähigkeit aufweist.
Darüber hinaus ist es verhältnismäßig empfindlich gegen
Wasser und Sauerstoff, so daß die Handhabung des Polyacetylens und die erforderliche Kapselung der Elemente verhältnismäßig aufwendig sind.

Vorteile der Erfindung

Das erfindungsgemäße Speicherelement mit den kennzeichnenden Merkmalen des Hauptanspruchs hat demgegenüber den Vorteil, daß der darin als Elektrodenwerkstoff verwendete
Graphit allgemein verfügbar und wesentlich preiswerter
ist als das Polyacetylen. Der Graphit weist in undotiertem
Zustand eine höhere elektrische Leitfähigkeit auf;

daraus hergestellte Sekundärbatterien haben einen geringeren Innenwiderstand, so daß höhere Ströme gezogen werden
können. Schließlich ist der Graphit unempfindlich gegen
Sauerstoff und Wasser, so daß bei der Herstellung der
Speicherelemente auf die Abwesenheit von Sauerstoff nicht
und von Wasser nur in dem Maße geachtet zu werden braucht,
wie zum Erreichen einer eventuell gewünschten höheren
Batteriespannung notwendig ist. Als Folge davon weist der
Graphit eine größere Alterungsbeständigkeit auf, so daß
mit einer längeren Lebensdauer der daraus hergestellten
Speicherelemente zu rechnen ist.

Durch die in den Unteransprüchen aufgeführten Maßnahmen
sind vorteilhafte Weiterbildungen und Verbesserungen des
im Hauptanspruch angegebenen Speicherelementes möglich.
Besonders vorteilhaft ist es, wenn der Graphit bereits
im Ausgangszustand beispielsweise mit $FeCl_3$ dotiert ist,
da ein solcher Graphit eine höhere Speicherfähigkeit für
die Ionen des im Elektrolyt enthaltenen Leitsalzes aufweist und die Volumenänderung des Graphits bei Aufnahme
der Ionen wesentlich geringer ist, was den Aufbau der
Speicherelemente vereinfacht. Bei Zellenspannungen oberhalb etwa 3,0 V eignet sich das Speicherelement besonders
als Sekundärbatterie, während es sich unterhalb 3,0 V als
Kondensator für Gleichstrom eignet, wobei es je nach
Flächengröße der Elektroden eine Kapazität von mehr als
1 F aufweist und beispielsweise einen "Gedächtnisverlust"
bei Rechenanlagen im Falle eines Stromausfalls verhindern
kann.

Zeichnung

Zwei Ausführungsbeispiele der Erfindung sind in der Zeichnung schematisch dargestellt und in der nachfolgenden Beschreibung näher erläutert. Es zeigen Fig. 1 einen Schnitt durch ein erstes Ausführungsbeispiel, bei welchem die Elektroden aus einer Graphitfolie bestehen, Fig. 2 einen Schnitt durch ein zweites Ausführungsbeispiel, bei welchem die Elektroden aus Graphitpulver bestehen und Fig. 3 schließlich eine Ladekennlinie, bei der Ladung und Spannung gegeneinander aufgetragen sind.

Beschreibung der Ausführungsbeispiele

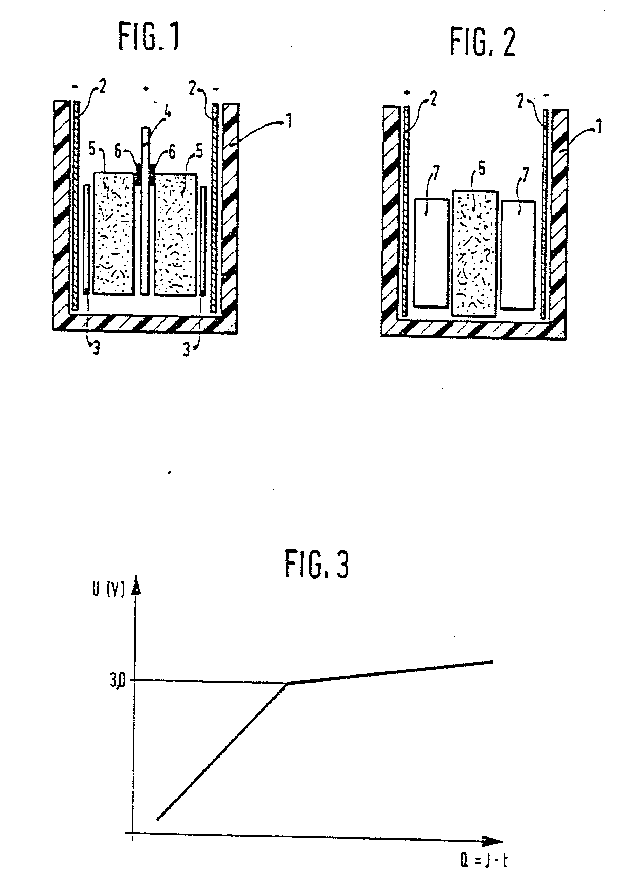

Das Ausführungsbeispiel von Fig. 1 weist ein Gehäuse aus einem gegenüber dem verwendeten Lösungsmittel des Leitsalzes beständigen Kunststoff, z. B. Polypropylen 1 auf, an deren Wandung zwei Metallbleche 2 anliegen, welche den Kontakt zu den beiden Folienelektroden 3 herstellen. Statt der Metallplatten 2 können für die Stromzuführung auch Kohlefasern oder Kohlefasergewebe verwendet werden. Zwischen diesen beiden Folienelektroden 3, die beispielsweise als negative Elektroden dienen, und der in der Mitte befindlichen Folienelektrode 4, die als positive Elektrode dient, befinden sich zwei Faservliese 5, die sowohl als Separator als auch als Elektrolytspeicher dienen und eine Dicke von 1 - 2 mm aufweisen, während die als Elektroden 3 und 4 dienenden Graphitfolien, wie sie aus expandiertem Graphit hergestellt und im Handel erhältlich sind, Dicken zwischen 0,1 und 0,5 mm aufweisen können. Als Elektrolyt dient hier eine 0,5 molare Lösung von Tetrabutylammoniumperchlorat (TBAP) in Propylencarbonat (PC), der praktisch vollständig in dem Faservlies 5 festgelegt ist. Die an sich bekannte und oben bereits beschriebene Volumenvergrößerung des Graphits im Falle des Einbaus von Ionen (oder auch Molekülen) zwischen die Schichtgitterebenen des Graphits würde normalerweise zu einem Zerfall dieser Elektroden führen, der jedoch dadurch vermieden wird, daß man das Element vor dem ersten Laden so zusammenbaut, daß sich beim ersten Ladevorgang ein mechanischer Druck aufbauen kann, der diesen Zerfall der Elektroden verhindert. Es muß jedoch dafür gesorgt werden, daß alle Flächenanteile der Elektrode, die während des Ladevorganges diesem Druck nicht ausgesetzt sind, durch Abdecken mit einer Folie vor dem Einbau von Ionen geschützt werden. Dies trifft insbesondere dort zu, wo beispielsweise die Folienelektrode 4 über die Oberkante des Faservlieses 5 hinausragt, daher müssen insbesondere diese Stellen der Elektrode 4 durch Schutzfolien 6 abgedeckt werden. Es ist selbstverständlich, daß wegen des auftretenden Druckes beim Laden das Gehäuse 1 ausreichend starr sein muß, damit es diesem Druck nicht nachgibt. Dieser sich aufbauende Druck verhilft darüber hinaus auch zu einer einwandfreien Kontaktierung zwischen den Elektroden 3 und den als Stromzuführung dienenden Metallblechen 2.

In Fig. 2 ist ein Ausführungsbeispiel schematisch dargestellt, bei dem als Elektroden statt Folien Graphitpulver verwendet wird. Auch diese Ausführungsform weist ein Gehäuse 1 aus Kunststoff sowie Metallbleche 2 als Kontakte auf. Die aktiven Elektroden bestehen aus Graphitpulver-Paketen von 2 - 5 mm Dicke, wobei dieses Graphitpulver beispielsweise in entsprechenden Tüten oder Taschen aus durchlässigem Material, z. B. Filterpapier, untergebracht sein kann. Die beiden Graphitpulver-Pakete 7 sind wiederum durch ein Faservlies 5 voneinander getrennt, das gleichzeitig als Separator und als Elektrolytspeicher dient. Setzt man hier als Elektrodenmaterial auf der einen Seite Graphit ein, der bereits mit $FeCl_3$ vordotiert ist, so ändert sich das Volumen dieses Graphitpulver-Paketes 7 bei der Ladung des Speicherelementes nur noch wenig, so daß auf diese Weise eine Regulierung des Druckaufbaues beim ersten Ladevorgang möglich wird. Als Elektrolyt kann auch hier wieder eine 0,5 molare Lösung von Tetrabutylammoniumperchlorat in Propylencarbonat eingesetzt werden.

Es hat sich als vorteilhaft erwiesen, den ersten Ladevorgang derartiger Speicherelemente, der im wesentlichen ein Formieren ist, mit einem geringen Strom von ca. 2 - 5 mA/cm$^2$ zu beginnen, diese Bedingungen über längere Zeit einzuhalten und darüber hinaus die Ladespannung stufenweise von 3 über 3,5 auf 4 und 4,5 V zu steigern.

Im Falle des Ausführungsbeispiels nach Fig. 1 und dessen Verwendung als Sekundärbatterie ergibt sich bei einem Gewicht der aktiven Elektroden von 0,368 g und einer aktiven Elektrodenoberfläche von 18 x 27 mm eine Leerlaufspannung nach dem Laden von 4 V, ein Kurzschlußstrom von 270 mA sowie ein Innenwiderstand von 15 Ohm. Die Kapazität beträgt 42 As, der Energieinhalt 80 Ws, woraus sich ein Energieinhalt je Gramm Elektrodenwerkstoff von etwa 215 Ws/g ergibt.

Bei einer Variante dieses Ausführungsbeispiels mit Butyrolacton als Lösungsmittel an Stelle von Propylencarbonat ergab sich ein Energieinhalt von 230 Ws je g Elektrodenwerkstoff.

In Fig. 3 ist eine Ladekennlinie dargestellt, in welcher die Spannung U gegen die Ladung Q aufgetragen ist. Es zeigt sich, daß zunächst die Spannung des Speicherelements proportional zur aufgenommenen Ladung ansteigt, bis eine Spannung von etwa 3,0 V erreicht ist. Von diesem Punkt an steigt die Spannung des Speicherelements mit zunehmender Ladung nur noch geringfügig. Das heißt, daß das Speicherelement bis zu einer Zellenspannung von 3,0 V das Verhalten einer Kapazität zeigt, bei dem bekanntlich die Gleichung gilt: Q = C . U, wobei die Kapazität mit 1 F oder mehr sehr hoch liegt, so daß für manche Fälle ein Einsatz als Reserve-Spannungsquelle, z. B. bei Mikrocomputern, möglich ist. Dabei müssen zum Erreichen der erforderlichen Spannung unter Umständen mehrere Zellen in Reihe geschaltet werden. Allerdings ist dieser Kondensator nur bei Gleichspannung

- 6 -

verwendbar, da die Aufladung durch einen Ionentransport
bewerkstelligt wird, so daß die Ionen schon bei verhältnismäßig niedrigen Frequenzen einer Wechselspannung nicht
mehr in das Graphitgitter eingebaut werden können, so daß
die Kapazität eines solchen Kondensators mit wachsender
Frequenz der Wechselspannung sehr schnell abfällt. - Oberhalb einer Spannung von etwa 3,0 V zeigt das Speicherelement Batterieverhalten, d. h. der Aufbau der Ladung erfolgt im wesentlichen bei nur wenig steigender Spannung,
während die Entladung in diesem Bereich mit einer viel
langsamer abfallenden Spannung erfolgt als bei Aufladung
nur bis ca. 3,0 V.

Generell kann das Speicherelement statt aus ebenen Elektroden und Separatoren auch aus gewickelten Bauteilen
aufgebaut werden ähnlich wie ein Kondensator. Dies erlaubt
die Unterbringung einer größeren Elektrodenfläche auf
einem relativ kleinen Raum. - Als Lösungsmittel für den
Elektrolyten können alle verwendet werden, die eine genügend hohe elektrische Leitfähigkeit des Elektrolyten
möglich machen.

R. 17771
14.4.1982 Pf/Jä

Robert Bosch GmbH, 7000 Stuttgart 1

Ansprüche

1. Speicherelement für elektrische Energie mit mindestens
zwei Elektroden und einem einen ionisierbaren Stoff enthaltenden Elektrolyten, dadurch gekennzeichnet, daß die
Elektroden aus Graphit bestehen und der ionisierbare Stoff
Ionen bildet, die zwischen den Schichten des Graphitgitters
einlagerbar sind.

2. Speicherelement nach Anspruch 1, dadurch gekennzeichnet, daß der Graphit im Ausgangszustand dotiert ist.

3. Speicherelement nach Anspruch 2, dadurch gekennzeichnet, daß der Graphit mit $FeCl_3$ dotiert ist.

4. Speicherelement nach einem der Ansprüche 1 bis 3, dadurch gekennzeichnet, daß der Graphit als Folie enthalten
ist.

5. Speicherelement nach einem der Ansprüche 1 bis 3, dadurch gekennzeichnet, daß die Elektroden aus hochgraphitierten Kohlefasern bestehen.

6. Speicherelement nach Anspruch 1, dadurch gekennzeichnet,
daß der Elektrolyt aus einem Leitsalz mit einwertigen
Ionen und aus einem polaren Lösungsmittel besteht.

. . .

7. Speicherelement nach Anspruch 6, dadurch gekennzeichnet, daß die Leitsalze aus Chloriden oder Perchloraten von Lithium, Kalium, Natrium oder Tetraalkylammonium und das Lösungsmittel aus Propylencarbonat, Butyrolacton oder Dimethylformamid besteht.

8. Speicherelement nach Anspruch 6 oder 7, dadurch gekennzeichnet, daß die Leitsalze in einer Konzentration von 0,5 Mol pro Liter Lösung bis zur Sättigung in dem Lösungsmittel vorliegen.

9. Verwendung des Speicherelements nach einem der Ansprüche 1 bis 8 als Sekundärbatterie.

10. Verwendung des Speicherelements nach einem der Ansprüche 1 bis 8 als Kondensator für Gleichspannung mit einer Kapazität $\geq$ 1 F.

## FIG.1

## FIG. 2

## FIG. 3

Europäisches Patentamt

**EUROPÄISCHER RECHERCHENBERICHT**

**0092713**
Nummer der Anmeldung

EP 83 10 3399

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,Y | GB-A-2 040 570 (MATSUSHITA ELECTRIC CO.) * Ansprüche 1,5,7; Figur 1; Seite 1, Zeilen 12-20; Seite 3, Zeilen 55-62; Tabelle 4 *<br><br>--- | 1,4,6 8,10 | H 01 M 10/40 H 01 G 9/00 |
| Y | DE-A-2 254 565 (WESTERN ELECTRIC COMP.) * Ansprüche 1,3-5,7,9,10; Figur 1; Seite 6; Seite 7, Zeilen 1-24; Seite 8, Zeilen 15-22; Seite 3, Zeile 29 - Seite 4, Zeile 9 *<br><br>--- | 1,6,7, 10 | |
| X | DE-A-2 031 798 (INTERNAT. BUSINESS MACHINES CORP.) * Ansprüche 1,2; Seite 3, Zeile 13 - Seite 4, Zeile 8; Seite 5, Zeile 17 - Seite 6, Zeile 9; Seite 11, Zeilen 10-14; Beispiel 1 *<br><br>--- | 1,4,10 | |
| | | | RECHERCHIERTE SACHGEBIETE (Int. Cl. ³) |
| X,Y | FR-A-2 366 221 (ANVAR)<br><br>* Ansprüche 1,5,8,9,12,14,15; Seite 1, Zeile 17 - Seite 3, Zeile 32; Seite 4, Zeile 30 - Seite 5, Zeile 13; Seite 5, Zeilen 30-37; Seite 12, Zeilen 1-20; Seite 13, Zeilen 2-13; Seite 14, Zeilen 10-37 *<br><br>---     -/- | 1,4,6 9 | H 01 M 10/40 H 01 M 4/58 H 01 G 9/00 |

Der vorliegende Recherchenbericht wurde für alle Patentansprüche erstellt.

| Recherchenort DEN HAAG | Abschlußdatum der Recherche 27-07-1983 | Prüfer D'HONDT J.W. |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A- 943 870 (F.J. JEDLICKA) * Ansprüche I,II,III; Seite 1, Zeilen 23-44; Seite 2, Zeilen 18-23, 38-41, 76-92 * | 1,4,9 | |
| Y | CHEMICAL ABSTRACTS, Band 83, Nr. 22, 1. Dezember 1975, Seite 414, Nr. 185403p, Columbus, Ohio, USA Y. TAKADA et al.: "Behavior of some carbon electrodes in organic electrolytes" & DENKI KAGAKU OYOBI KOGYO BUTSURI KAGAKU 1975, 43(6), 329-333 * Zusammenfassung * | 1,5,6, 7,9 | |
| Y | CHEMICAL ABSTRACTS, Band 86, Nr. 22, 30. Mai 1977, Seite 484, Nr. 162751y, Columbus, Ohio, USA J.O. BESENHARD: "The electrochemical preparation and properties of ionic alkali metal- and tetraalkylammonium-graphite intercalation compounds in organic electrolytes" & CARBON 1976, 14(2), 111-115 * Zusammenfassung * | 1,6 | RECHERCHIERTE SACHGEBIETE (Int. Cl. ³) |
| Y | US-A-3 844 837 (D.N. BENNION) * Ansprüche 1,5; Spalte 1, Zeilen 39-42; Beispiele 5,8 * | 1,5-9 | |
| | --- -/- | | |

Der vorliegende Recherchenbericht wurde für alle Patentansprüche erstellt.

| Recherchenort DEN HAAG | Abschlußdatum der Recherche 27-07-1983 | Prüfer D'HONDT J.W. |
|---|---|---|

**Europäisches Patentamt**

**EUROPÄISCHER RECHERCHENBERICHT**

**0092713**
Nummer der Anmeldung

EP 83 10 3399

Seite 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-A-2 139 714 (RHEINISCH-WESTFÄLISCHES ELEKTRIZITÄTSWERK AG) * Ansprüche 1,2; Seite 3, Zeilen 25-31; Seite 5, Zeilen 9-29; Seite 6, Zeile 24 - Seite 7, Zeile 14 * | 1,6,7, 9 | |
| | --- | | |
| A | CHEMICAL ABSTRACTS, Band 90, Nr. 2, 8. Januar 1979, Seite 566, Nr. 14859g, Columbus, Ohio, USA P. TOUZAIN et al.: "Iron-graphite intercalation compound obtained by electrochemical reduction" & MATER. SCI. ENG. 1977, 31, 77-81 * Zusammenfassung * | 2,3 | |
| | --- | | |
| P,Y | J. CHEM. SOC., CHEM. COMMUN., Nr. 20, 15. Oktober 1982, Seiten 1158-1159 TAKASHI NOGAMI et al.: "Lightweight, stable and rechargeable battery with an activated carbon fibre electrode" * Seiten 1158-1159 * | 1 | **RECHERCHIERTE SACHGEBIETE (Int. Cl. 3)** |
| | ----- | | |

Der vorliegende Recherchenbericht wurde für alle Patentansprüche erstellt.

| Recherchenort DEN HAAG | Abschlußdatum der Recherche 27-07-1983 | Prüfer D'HONDT J.W. |
|---|---|---|